(19) Europäisches Patentamt
European Patent Office
Office européen des brevets

(11) EP 2 441 788 A1

# (12) EUROPÄISCHE PATENTANMELDUNG

(43) Veröffentlichungstag:
**18.04.2012 Patentblatt 2012/16**

(51) Int Cl.:
***C08G 64/34*** *(2006.01)* ***C08G 65/26*** *(2006.01)*

(21) Anmeldenummer: **10187625.8**

(22) Anmeldetag: **14.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51368 Leverkusen (DE)**

(72) Erfinder:
- **Gürtler, Christoph Dr.**
  **51368 Leverkusen (DE)**
- **Grasser, Stefan Dr.**
  **51368 Leverkusen (DE)**
- **Aurel, Wolf Dr.**
  **51368 Leverkusen (DE)**

## (54) Verfahren zur Herstellung von Polyetherpolyolen

(57) Die vorliegende Erfindung betrifft ein Verfahren zur Herstellung von Polyethercarbonatpolyolen aus einer oder mehrerer H-funktionellen Startersubstanzen, einem oder mehreren Alkylenoxiden (Epoxiden) und Kohlendioxid in Gegenwart mindestens eines Doppelmetallcyanid-Katalysators, wobei die Herstellung der Polyethercarbonatpolyole in einem Rohrreaktor durchgeführt wird.

EP 2 441 788 A1

## Beschreibung

Die vorliegende Erfindung betrifft ein Verfahren zur Herstellung von Polyethercarbonatpolyolen aus einer oder mehrerer H-funktionellen Startersubstanzen, einem oder mehreren Alkylenoxiden (Epoxiden) und Kohlendioxid in Gegenwart mindestens eines Doppelmetallcyanid-Katalysators, wobei die Herstellung der Polyethercarbonatpolyole in einem Rohrreaktor durchgeführt wird.

Die Herstellung von Polyethercarbonatpolyolen durch katalytische Anlagerung von Alkylenoxiden (Epoxiden) und Kohlendioxid an H-funktionellen Startersubstanzen (Starter) wurde seit mehr als 40 Jahren intensiv untersucht (Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie Kohlendioxid ($CO_2$) zu einem Polymer darstellt. Als weiteres Produkt entsteht das in Formel (I) gezeigte cyclische Carbonat (beispielsweise für R = $CH_3$ Propylencarbonat).

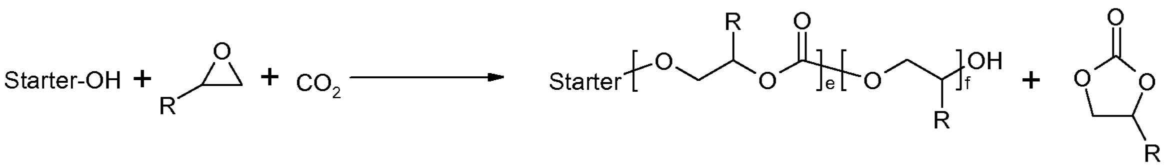

(I)

Die Bildung von Copolymeren aus Epoxiden (z.B. Propylenoxid) und Kohlendioxid ist seit langem bekannt. So beschreibt zum Beispiel US 4500704 die Copolymerisation von Kohlendioxid und Propylenoxid unter Verwendung von DMC-Katalysatoren. Es handelt sich bei dem Verfahren um ein Batch-Verfahren, d.h. Katalysator und die vollständige Menge Propylenoxid werden vor Beginn der Reaktion eingefüllt und vor dem Erhitzen mit Kohlendioxid beaufschlagt. Durch die Befüllung des Autoklaven mit der Gesamtmenge Epoxid ergibt sich jedoch den Nachteil, dass eine große Menge Propylenoxid vorgelegt wird, die im Falle einer Homo-Polymerisation zur Freisetzung von ca. 1400 kJ/kg Polymer führen kann. Derartig hohe Wärmemengen lassen sich in einem Rührkessel nur schwer beherrschen und bringen damit Nachteile aus Gründen eines sicheren Betriebs mit sich.

Unter einer Batch-Fahrweise im Sinne dieser Erfindung wird verstanden, dass sämtliche Edukte, also Epoxid (e), gegebenenfalls H-funktionelle Startersubstanz(en) und Kohlendioxid, vor Beginn der Reaktion in den Reaktor eingebracht werden. Im Rahmen dieser Erfindung wird unter einer Semibatch-Fahrweise verstanden, dass wenigstens einer der zuvor genannten Stoffe über einen gewissen Zeitraum dem Reaktor zugeführt wird.

WO-A 2006/103213 beschreibt beispielhaft ein semi-batchartiges Verfahren, wo die H-funktionelle Startersubstanz und der Katalysator vorgelegt werden und dort getrocknet werden. Nach Aktivierung des Katalysators durch Zugabe einer Teilmenge des Propylenoxids wird weiteres Propylenoxid kontinuierlich in den Reaktor dosiert und der gewünschte $CO_2$-Druck eingestellt. Die kontinuierliche Zugabe von Propylenoxid trägt u.a. einem verbesserten Sicherheitskonzept Rechnung. Ein Nachteil dieser Fahrweise in Verbindung mit einem Autoklav bzw. Rührkessel ist jedoch, dass sich abhängig vom Reaktorvolumen, der Füllhöhe des Reaktors, den Eigenschaften der flüssigen Phase, der Zusammensetzung der Gasphase und weiteren Parametern bei einem voreingestellten Druck und einer voreingestellten Temperatur eine veränderliche Menge an Kohlendioxid im Reaktor ergibt. Das bedeutet, dass während der Reaktion die verfügbare Menge an Kohlendioxid bei konstanten Druck und konstanter Temperatur unterschiedlich ist in Abhängigkeit von den zuvor genannten Parametern. Diese Parameter nehmen in der Regel auf die Produkteigenschaften Einfluss. Außerdem ist zu erwarten, dass bei diesem Verfahrenskonzept gemäß der Offenbarung von WO-A 2008/092767 DMC-Katalysatoren mit niedermolekularen H-funktionellen Startersubstanzen (wie beispielsweise Wasser, Propylenglykol, Glyzerin) ein sehr schlechtes Reaktionsverhalten aufweisen, beziehungsweise keine Reaktion zeigen. Da niedermolekulare Startersubstanzen inhibierend wirken, können diese insbesondere bei Batch- oder Semibatch-Prozessen, bei denen die gesamte H-funktionelle Startersubstanzmenge vorgelegt wird, nicht oder nur schwer eingesetzt werden.

WO-A 2008/092767 offenbart ein Verfahren zur Herstellung von Polyethercarbonatpolyolen durch Anlagerung von Alkylenoxiden und Kohlendioxid an H-funktionelle Startersubstanzen unter Verwendung von DMC-Katalysatoren, wobei eine oder mehrere höhermolekulare Startersubstanzen (z.B. Polypropylenoxid der Molmasse 460 g/mol) im Reaktor vorgelegt werden und eine oder mehrere niedermolekulare Startersubstanzen (z.B. Monopropylenglykol; Molmasse

76 g/mol; siehe Beispiel 1) sowie Alkylenoxid während der Reaktion kontinuierlich in den Reaktor zudosiert werden. Gemäß WO-A 2008/092767 ist die Menge des ins Polymer eingebauten Kohlendioxids abhängig vom $CO_2$-Druck im Reaktor, wobei ein höherer $CO_2$-Druck einen höheren Einbau von Kohlendioxid ins Polymer zur Folge hat. Dies hat die Nachteile, dass in der Anschaffung kostenintensive Hochdruckapparaturen für eine großtechnische Herstellung von Polyethercarbonatpolyolen erforderlich sind und gleichzeitig wegen den relativ großen Gasvolumen ein aufwendiges Sicherheitskonzept bereitgestellt werden muss.

Ein weiterer Nachteil der im Stand der Technik offenbarten batchartigen Verfahren bzw. semibatchartigen Verfahren ist die Tatsache, dass der Katalysator zunächst aktiviert werden muss (siehe z.B. WO-A 2008/092767; Beispiel 1), was nachteiligerweise mit einem zusätzlichen Schritt verbunden ist und damit zusätzliche Kosten verursacht.

Ein weiterer Nachteil eines Rührkessels ist das ungünstigerweise niedrige Verhältnis von Oberfläche zu Volumen, das dazu führt, dass die durch die Polymerisation freiwerdende Wärme (> 1000 kJ/kg Polymer) über die Oberfläche des Reaktors nur wenig effizient abgeführt werden kann, was sich nachteilig auf eine Temperaturkontrolle der Reaktion auswirken kann. Wird die Wärmeabfuhr mittels innen liegendem oder externem Wärmetauscher vorgenommen, hat dies den Nachteil, dass die Anschaffung eines Wärmetauschers zu einer höheren Investitionssumme für die Anlage und damit zu höheren Kosten führt. Wird eine ausreichende Wärmeabfuhr und damit eine optimale Temperatur der Reaktionsmischung nicht eingestellt, kann dies zu einer ungünstigen Selektivität der Reaktion oder Verlust an Katalysatoraktivität führen. Des Weiteren kann durch zu hohe Temperatur sowohl das Produkt zersetzt werden wie auch der Katalysator irreversibel desaktiviert werden. Ist die Wärmeabfuhr eines Rührkesselreaktors nicht ausreichend, kann die mögliche hohe Reaktionsgeschwindigkeit der hoch aktiven DMC-Katalysatoren nicht voll ausgenutzt werden, d.h. es findet eine Limitierung der maximalen Reaktionsgeschwindigkeiten aufgrund der begrenzten Wärmeabfuhrleistung dieser Reaktortypen statt, wobei in der Regel auch Reaktoren mit innen liegenden wie auch mit externen Wärmetauschern diesbezüglich limitiert sind. Die Folge ist, dass die Reaktion nur bis zu einer bestimmten Alkylenoxid-Dosiergeschwindigkeit bei konstanter Temperatur gefahren werden kann, obwohl aufgrund der hohen Aktivität des DMC-Katalysators eine höhere Alkylenoxid-Dosiergeschwindigkeit erreichbar wäre.

Ein weiterer grundsätzlicher Nachteil eines Semi-Batch- oder Batch-Verfahrens besteht darin, dass zur Produktentnahme das Verfahren gestoppt werden muss und daher ein Zeitverlust resultiert.

Eine kontinuierliche Reaktion von Alkylenoxiden und $CO_2$ kann in einem rückvermischten Reaktor (kontinuierlicher Rührkessel) stattfinden oder in einem kontinuierlichen Reaktor ohne Rückvermischung. Die kontinuierlichen Reaktoren mit Rückvermischung zeichnen sich i. a. durch die gleichen Nachteile wie die batch oder semi-batch betriebenen Rührkessel aus.

WO-A 2007/135154 offenbart eine Reaktionseinheit mit mehreren, parallel übereinander angeordneten Lagen A, B, die mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden. Sie kann zur Herstellung von Polyetherpolyen aus ein oder mehreren Alkylenoxiden und gegebenenfalls Kohlendioxid und ein oder mehrreren H-funktionellen Starterverbindungen eingesetzt werden. Um eine großtechnische Produktion (world-scale) zu ermöglichen, muss ein sogenanntes "Numberingup" durchgeführt werden, was aufgrund des regelungstechnischen Aufwands zu einer unwirtschaftlichen Produktion führt. Bei Verwendung eines suspendierten heterogenen Katalysators, beispielsweise eines DMC-Katalysators entsprechend des Verfahrens der vorliegenden Erfindung, sind jedoch Probleme bezüglich der Ablagerung von Katalysator im Mikroreaktor und den parallel angeordneten Platten zu erwarten, was zu Verstopfungen in einem kontinuierlich betriebenen Verfahren führen würde.

Es war daher Aufgabe der vorliegenden Erfindung, ein Verfahren zur Herstellung von Polyethercarbonatpolyolen bereitzustellen, welches die zuvor genannten Nachteile nicht aufweist und wobei die Temperatur der Reaktion auf einfache Weise gut kontrolliert werden kann.

Überraschenderweise wurde nun gefunden, dass ein Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, dadurch gekennzeichnet, dass die Anlagerung in einem Rohrreaktor durchgeführt wird, die oben genannte Aufgabe löst.

Der Rohrreaktor im Sinne der Erfindung weist im Allgemeinen ein Verhältnis von Rohrlänge L zu Rohrdurchmesser $d_R$ von $L / d_R > 50$ auf und ist vorzugsweise frei von mehreren, parallel übereinander angeordneten Lagen, die gegebenenfalls mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden.

Die Durchführung der Anlagerung von einem oder mehreren Alkylenoxiden und Kohlendioxid an eine oder mehrere H-funktionellen Startersubstanzen in Gegenwart mindestens eines DMC-Katalysators in einem Rohrreaktor hat den Vorteil, dass eine effiziente Wärmeabfuhr erfolgt. Probleme bezüglich der Ablagerung von DMC- Katalysator im Rohrreaktor gemäß dem erfindungsgemäßen Verfahren wurden nicht festgestellt. Durch die gute Kontrolle der Temperatur der Reaktion kann somit auch vermieden werden, dass durch eine zu hohe Temperatur bereits gebildetes Polyethercarbonatpolyol zersetzt wird und/oder DMC-Katalysator (ggf. irreversibel) desaktiviert wird.

Darüber hinaus wurde überraschend gefunden, dass im erfindungsgemäßen Verfahren DMC-Katalysatoren ohne vorhergehende Aktivierungsschritte (in An- oder Abwesenheit von Kohlendioxid) eingesetzt werden können. Dies hat den Vorteil, dass gegenüber einem Batch- oder Semibatch-Verfahren in Rührkesseln ein vorhergehender, zeit- und kostenintensiver Aktivierungsschritt des DMC-Katalysators entfallen kann. Prinzipiell ist es jedoch auch möglich, in einem vorgelagerten Schritt den DMC-Katalysator zunächst zu aktivieren und dann im erfindungsgemäßen Verfahren einzusetzen. Der vorgelagerte Schritt zur Aktivierung des DMC-Katalysators kann in einem ersten Teilabschnitt des Rohrreaktors erfolgen oder aber in einem vorgeschalteten Reaktor erfolgen, der selbst wiederum ein Rohrreaktor oder ein Rührkessel sein kann.

Als Aktivierung des DMC-Katalysators wird ein Schritt bezeichnet, bei dem eine Teilmenge des Alkylenoxids, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Temperaturspitze ("Hotspot") und/oder ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Hotspot. Im Allgemeinen kann dem Aktivierungsschritt ein Schritt zum Trocknen des DMC-Katalysators und ggf. des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

In einer bevorzugten Ausführungsform handelt es sich um ein Verfahren zur Herstellung von Polyethercarbonatpolyolen durch Anlagerung von einem oder mehreren Alkylenoxiden und Kohlendioxid an eine oder mehrere H-funktionelle Startersubstanzen in Gegenwart mindestens eines DMC-Katalysators, dadurch gekennzeichnet, dass die Anlagerung in einem Rohrreaktor durchgeführt wird, wobei

(i) der DMC-Katalysator in einer oder mehreren H-funktionellen Startersubstanzen suspendiert wird,
(ii) die Suspension aus (i) mit einem oder mehreren Alkylenoxiden und mit 10 bis 200 bar, bevorzugt 15 bis 180 bar, besonders bevorzugt 20 bis 120 bar Kohlendioxid zusammengebracht wird, und
(iii) das aus (ii) resultierende Gemisch in einem Rohrreaktor bei einer Temperatur von 80 bis 150 °C, bevorzugt 90 bis 135 °C und vorzugsweise bei einem Reaktionsdruck von 10 bis 200 bar, besonders bevorzugt 15 bis 180 bar, ganz besonders bevorzugt 20 bis 120 bar zur Reaktion gebracht wird.

Unter Reaktionsdruck wird der Druck im Rohrreaktor (Schritt iii) verstanden. Dieser Druck kann beispielsweise dadurch geregelt werden, dass zur Druckerhöhung weiteres Kohlendioxid in den Rohrreaktor eingeführt oder eine Druckerniedrigung über ein Ventil am Rohrreaktor bewirkt wird.

In Schritt (ii) kann das Zusammenbringen der einzelnen Komponenten gleichzeitig oder nacheinander, vor der Zugabe zum Rohrreaktor oder im Rohrreaktor erfolgen; unter einem "nacheinander zusammenbringen" der einzelnen Komponenten wird verstanden, dass

(ii-1) die Suspension aus (i) zunächst in einem ersten Mischer mit einem oder mehreren Alkylenoxiden zusammengebracht wird und anschließend in einem zweiten Mischer mit 10 bis 200 bar, bevorzugt 15 bis 180 bar, besonders bevorzugt 20 bis 120 bar Kohlendioxid zusammengebracht wird, oder
(ii-2) die Suspension aus (i) zunächst in einem ersten Mischer mit mit 10 bis 200 bar, bevorzugt 15 bis 180 bar, besonders bevorzugt 20 bis 120 bar Kohlendioxid zusammengebracht wird und anschließend in einem zweiten Mischer mit einem oder mehreren Alkylenoxiden zusammengebracht wird.

Schritt (ii)) kann bei einer Temperatur von 5 bis 50 °C durchgeführt werden. Dadurch wird erreicht, dass aufgrund der relativ niedrigen Temperatur keine Polymerisation im Mischer einsetzt.

Bei dem Rohrreaktor handelt es sich beispielsweise um ein beheiztes Rohr. Eine mögliche Ausführungsform ist schematisch in Abbildung 1 gezeigt. Hier ist der Rohrreaktor mit einem Kühlmantel versehen, wobei über einen Einlaß (**A1**) bzw. Auslaß (**A2**) eine Wärmeträgerflüssigkeit zur temperierung geleitet wird. Die Edukte, d.h. die aus Schritt (ii) resulierende Mischung aus DMC-Katalysator (**E**), einer oder mehreren H-funktionellen Startersubstanzen (**D**), ein oder mehreren Alkylenoxiden (**B**) und Kohlendioxid (**C**) werden kontinuierlich dem Rohrreaktor (**G**) an einem Ende (Einlaß) zugeführt und das resultierende Produkt (**F**) (im wesentlichen Polyethercarbonatpolyol) wird kontinuierlich am anderen Ende des Rohrreaktors (Auslaß) entnommen.

Die Zuführungen zu den Mischern bzw. zum Rohrreaktor sind vorzugsweise beheizbar, so dass auch feste bzw. hochviskose H-funktionellen Startersubstanzen verwendet werden können.

Der Rohrreaktor wird bevorzugt aus rostfreiem Stahl hergestellt, aber es ist ebenso möglich, dass auch andere Materialien verwendet werden können, solange das Material hinsichtlich Edukte/Produkte, Drücke usw. kompatibel ist.

Der Rohrreaktor kann entweder aus einem durchgängigen Stück Rohr oder aus mindestens zwei aneinandergefügten Rohren, beispielsweise auch mit unterschiedlichen Eigenschaften wie unterschiedlichem, inneren Durchmesser aufgebaut sein. Der innere Durchmesser des Rohrreaktors kann über die gesamte Länge gleich oder verschieden sein.

Der innere Durchmesser des Rohrreaktors beträgt vorzugsweise von 1,1 mm bis 500 mm. Beispielsweise ist ein erstes Teilstück des Rohrreaktors dünner als das zweite Teilstück. Dies hat den Vorteil, dass am Anfang des Rohrreaktors die Reaktionswärme durch das günstigere Verhältnis an Fläche / Volumen ein besserer Wärmeaustausch erreicht wird. Vorzugsweise weist der Rohrreaktor über die ersten 20 bis 60% seiner Länge einen inneren Durchmesser des Rohrreaktors von 1,1 mm bis < 100 mm auf, und über die zweiten 80 bis 40 % seiner Länge einen inneren Durchmesser des Rohrreaktors von 100 mm bis 500 mm, vorzugsweise von 100 mm bis 250 mm auf.

Vorzugsweise werden gemäß des erfindungsgemäßen Verfahrens im Rohreaktor mittlere Verweilzeiten von 0,5 Minuten bis 6 Stunden, bevorzugt von 1 Minute bis 4 Stunden, besonders bevorzugt 1 Minute bis 60 Minuten eingestellt. Die mittlere Verweilzeit lässt sich aus dem Verhältnis zwischen Volumenstrom und Reaktorvolumen bestimmen, wobei letzteres sich aus dem inneren Durchmesser des Rohres bzw. der Rohre und die Länge des Rohres bzw. die Länge der einzelnen Rohrabschnitte ergibt. Bei zu kurzen Verweilzeiten ist im allgemeinen der Umsatz unvollständig, und eine zu lange Verweilzeiten ist im allgemeinen nachteilig in Bezug auf die Raum-Zeit-Ausbeute und macht damit den Prozess weniger rentabel.

Es ist vorteilhaft, den Volumenstrom so einzustellen, dass sich ein turbulentes Strömungsprofil einstellt (Dimensionslose Kennzahl Reynolds größer 2300).

Besteht der Reaktor aus mindestens zwei aneinandergefügten Rohren, so ist es möglich, diese auf unterschiedliche Temperaturen einzustellen (beispielsweise durch Beheizen oder Kühlen).

Es ist prinzipiell auch möglich, mehrere Zugabestellen entlang des Rohrreaktors zu haben, so dass an verschiedenen Stellen des Reaktors Alkylenoxid oder eine Mischung mehrerer Alkylenoxide und H-funktionelle Startersubstanzen bzw. eine Mischung von H-funktionellen Startersubstanzen zugegeben werden kann. Hierdurch ist es möglich, Block-Copolymere zu erzeugen.

Vorzugsweise kann ein Rohrreaktor mit einem Innendurchmesser von 1,1 mm bis 250 mm ohne Einbauten betrieben werden. Vorzugsweise kann ein Rohrreaktor mit einem Innendurchmesser von > 250 mm bis 500 mm ein oder mehrere statische Mischer enthalten oder eine Kombination von statischen Mischern und Wärmetauscher (beispielsweise Kühlschlangen) enthalten.

Es ist von Vorteil, wenn das gesamte Volumen des Rohrreaktors mit Flüssigkeit/Suspension gefüllt ist. Optimalerweise ist diese Flüssigkeit bzw. Suspension bezüglich der Flüssigkeiten einphasig, um einen besonders guten Stoffaustausch zu gewährleisten. Dies wird im Allgemeinen durch die in Schritt (iii) angegebene Temperatur und Druck erreicht.

Bei dem Verfahren werden vorzugsweise getrockneter und gemahlener DMC-Katalysator (z.B. Vakuumtrockenschrank bei 100 °C und 900 mbar), H-funktionelle Startersubstanzen sowie Alkylenoxid(e) und Kohlendioxid kontinuierlich durch ein Rohr bzw. mehrere Rohre gepumpt, wobei Kohlendioxid flüssig vorliegt, um eine bessere Mischbarkeit der Komponenten zu ermöglichen. Die molaren Verhältnisse der Reaktionspartner variieren je nach gewünschtem Polymer.

Bevorzugt wird der getrocknete DMC-Katalysator als Suspension in einer oder mehreren H-funktionellen Startersubstanzen zugegeben. Typische Konzentrationen des DMC-Katalysators in der Katalysatorsuspension liegen zwischen 0,1 - 50 Gew.-%, bevorzugt 0,1 - 25 Gew.-% und besonders bevorzugt 0,1 - 10 Gew.-% bezogen auf die Katalysatorsuspension aus DMC-Katalysator und H-funktionellen Startersubstanzen. Die Suspension soll auf jeden Fall derart sein, dass sie mit konventionellen Pumpen (z.B. Membranpumpen) förderbar bleibt.

Es ist vorteilhaft, den DMC-Katalysator vor Einsatz auf eine bestimmte Partikelgröße zu mahlen. Als praktikabel haben sich Partikel kleiner 100 μm erwiesen. Prinzipiell sind noch kleinere Partikelgrößen noch besser, um Verstopfungen zu vermeiden.

Ein schematischer Versuchsaufbau für eine bevorzugte Ausführungsform ist in Abbildung 2 gezeigt. Aus dem gerührten Vorlagebehälter **1** wird die Suspension bestehend aus einer oder mehreren H-funktionellen Startersubstanzen und gemahlenem sowie getrockneten DMC-Katalysator mittels einer Pumpe (beispielsweise einer Membranpumpe) zu einem Mischer **2** (beispielsweise ein Kaskadenmischer) gepumpt. Das Alkylenoxid (z.B. Propylenoxid) aus Vorlagebehälter **3** wird mittels einer Pumpe (beispielsweise einer HPLC-Pumpe) zum Mischer **2** gefördert. In Mischer **2** erfolgt eine Mischung bei einer Temperatur von 5 bis 50 °C, bevorzugt 10 bis 45 °C, wobei die resultierende Mischung noch nicht zur Reaktion kommt. Dieser Mischstrom wird in den Mischer **4** (beispielsweise eine Kaskadenmischer) geführt, wo er bei einer Temperatur von 5 bis 50 °C, bevorzugt 10 bis 45 °C mit Kohlendioxid vermischt wird. Auch hierbei kommt es noch nicht zur Reaktion. Das Kohlendioxid wird aus einer Vorlage **5** (beispielsweise eine Gasflasche mit Steigrohr) mittels einer Pumpe (beispielsweise einer HPLC-Pumpe) gefördert. Die Reaktionsmischung wird aus **4** in Rohrreaktor 6 geleitet. Der Rohrreaktor ist auf eine Temperatur von 80 bis 150 °C, bevorzugt 90 bis 135 °C gebracht (vorzugsweise durch einen Wärmetauscher oder ein thermostatisierbares Ölbad) und vorzugsweise auf einen Reaktionsdruck von 10 bis 200 bar, besonders bevorzugt 15 bis 180 bar, ganz besonders bevorzugt 20 bis 120 bar eingestellt, wobei die eigentliche Reaktion (d.h. die Anlagerung von einem oder mehreren Alkylenoxiden und Kohlendioxid an eine oder mehrere H-funktionellen Startersubstanzen in Gegenwart mindestens eines DMC-Katalysators) stattfindet. Der zur Konstanthaltung des für das überkritische Kohlendioxid notwendigen Drucks wird durch das Druckrückhaltventil 7 eingestellt.

Das entstehende Produkt (Polyethercarbonatpolyol) wird im Behälter 8 gesammelt.

Prinzipiell sind unterschiedliche Mischer an den Positionen **2** und **4** denkbar. Beispielsweise sind die in WO-A 2007/135154 genannten Mischer geeignet, insbesondere Split-Recombine-Mischern wie beispielsweise der im Ausführungsbeispiel verwendete "Kaskadenmischer 2S" der Firma Ehrfeld Mikrotechnik BTS GmbH. Diese Split-Recombine-Mischer zeichnen sich durch Stufen aus wiederkehrender Trennung und Zusammenführung von Strömen aus. Bei jeder dieser Stufen wird die Lamellenzahl sukzessive verdoppelt und dadurch Lamellendicke und Diffusionsweg halbiert. Die Vermischung kann auch im Rohr mittels Düsen oder Mischer mit bewegten, rotierenden Einbauten erfolgen.

Durch die angegebene Reaktionstemperatur im Rohrreaktor wird zum einen eine ausreichend hohe Reaktionsgeschwindigkeit und ein hoher Reaktionsumsatz erreicht, was dazu beiträgt, die Verweilzeiten im Reaktor zu verkürzen und die Produkte frei von Edukten zu erhalten (vollständiger Umsatz), zum anderen werden möglicherweise störende Nebenreaktionen, insbesondere eine bei zu hoher Temperatur eintretende Zersetzung des Produkts (im wesentlichen Polyethercarbonatpolyol) bzw. eine Verschlechterung der Selektivität (d.h. zunehmender Anteil an zyklischem Carbonat wie z.B. Propylencarbonat im Produkt) vermieden.

Wird der Rohrreaktor bei dem angegebenen Reaktionsdruck betrieben, hat dies den Vorteil, dass die Edukte auch bei erhöhter Temperatur flüssig vorliegen. Zudem bewirkt ein hoher Druck eine höhere Reaktionsgeschwindigkeit und einen höheren Umsatz sowie die Durchmischung der Reaktanden wird verbessert.

Die erfindungsgemäß erhaltenen Polyethercarbonatpolyole können im allgemeinen eine Funktionalität von mindestens 1, bevorzugt von 2 bis 8, besonders bevorzugt von 2 bis 6 und ganz besonders bevorzugt von 2 bis 4 aufweisen. Das Molekulargewicht beträgt bevorzugt 400 bis 10000 g/mol und besonders bevorzugt 500 bis 6000 g/mol.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyloxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete H-funktionelle Startersubstanz können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ , besonders bevorzugt ist -OH. Als H-funktionelle Startersubstanz wird beispielsweise eine oder mehrere Verbindungen ausgewählt aus der Gruppe bestehend aus Wasser, ein- oder mehrwertige Alkohole, ein- oder mehrwertige Amine, mehrwertige Thiole, Carbonsäuren, Aminoalkohole, Aminocarbonsäuren, Thioalkohole, Hydroxyester, Polyetherpolyole, Polyesterpolyole, Polyesteretherpolyole, Polyethercarbonatpolyole, Polycarbonatpolyole, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di-und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF SE), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-o 1, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure,

Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatdiole eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmopheri® C-Typen der Bayer MaterialScience AG verwendet werden, wie z. B. Desmophen®C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO-(CH_2)_x-OH \qquad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Sind die Alkohole bei 20 °C fest oder hochviskos, so ist es vorteilhaft, die Zuführungen zum Rohrreaktor zu beheizen. Weitere bevorzugte H-funktionelle Startersubstanzen sind Neopentylglykol, Trimethylolpropan, Glycerin, Pentaerythrit, Umsetzungsprodukte

der Alkohole gemäß Formel (II) mit ε-caprolacton, z.B. Umsetzungsprodukte von Trimethylolpropan mit ε-Caprolacton, Umsetzungsprodukte von Glycerin mit ε-caprolacton, sowie Umsetzungsprodukte von Pentaerythrit mit ε-caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8 Octandiol, Diethylenglykol, Dipropylenglykol, Glycerin, Trimethylolpropan, di- und trifunktionelle Polyetherpolyole, wobei das Polyetherpolyol aus einer di-oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Es ist auch möglich, die in EP Anmeldenummer 10163170.3 offenbarten alkalischen DMC-Katalysatoren einzusetzen.

Zur Herstellung der Doppelmetallcyanid-Verbindungen geeignete cyanidfreie Metallsalze besitzen bevorzugt die allgemeine Formel (III),

$$M(X)_n \qquad (III)$$

wobei

M ausgewählt ist aus den Metallkationen $Zn^{2+}$ $Fe^{2+}$ $Ni^{2+}$ $Mn^{2+}$, $C0^{2+}$ $Sr^{2+}$ $Sn^{2+}$, $Pb^{2+}$ und, $Cu^{2+}$ M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

n ist 1, wenn X = Sulfat, Carbonat oder Oxalat ist und

n ist 2, wenn X = Halogenid, Hydroxid, Cyanat, Thiocyanat, Isocyanat, Isothiocyanat oder Nitrat ist, oder geeignete cyanidfreie Metallsalze besitzen die allgemeine Formel (IV),

$$M_1(X)_3 \qquad (IV)$$

wobei

M ausgewählt ist aus den Metallkationen $Fe^{3+}$, $Al^{3+}$ und $Cr^{3+}$,

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

r ist 2, wenn X = Sulfat, Carbonat oder Oxalate ist und

r ist 1, wenn X = Halogenid, Hydroxid, Cyanat, Thiocyanat, Isocyanat, Isothiocyanat, Carboxylat oder Nitrat ist,

oder geeignete cyanidfreie Metallsalze besitzen die allgemeine Formel (V),

$$M(X)s \qquad (V)$$

wobei

M ausgewählt ist aus den Metallkationen $Mo^{4+}$, $V^{4+}$ und $W^{4+}$

X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (VI),

$$M(X)_t \qquad (VI)$$

wobei
M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Cyanat, Thiocyanat, Isocyanat, Isothiocyanat, Carboxylat oder Nitrat ist,

Beispiele geeigneter cyanidfreier Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VII)

$$(Y)_a\ M'(CN)_b\ (A)_c \qquad (VII)$$

wobei
M' ausgewählt ist aus einem oder mehreren Metallkationen der Gruppe bestehend aus Fe(II), Fe(III), Co(II), Co(III), Cr (II), Cr(III), Mn(11), Mn(111), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$, $Cs^+$) und Erdalkalimetall (d.h. $Be^{2+}$, $Ca^{2+}$, $Mg^{2+}$, $Sr^{2+}$ $Ba^{2+}$),
A ausgewählt ist aus einem oder mehreren Anionen der Gruppe bestehend aus Halogeniden (d..h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Kaliumhexacyanocobaltat(III), Kaliumhexacyano-ferrat(II), Kaliumhexacyanoferrat(III), Calciumhexacyanocobaltat(III) und Lithiumhexacyano-cobaltat(III).

Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x,}\ (CN)_{y]z} \qquad (VIII),$$

worin M wie in Formel (III) bis (VI) und
M' wie in Formel (VII) definiert ist, und
x, x', y und z sind ganzzahlig und so gewählt, dass die Elektronenneutralität der Doppelmetallcyanidverbindung gegeben ist.

Vorzugsweise ist
x=3,x'=1,y=6undz=2,
M = Zn(II), Fe(II), Co(II) oder Ni(II) und
M' = Co(III), Fe(III), Cr(III) oder Ir(III).

Beispiele geeigneter Doppelmetallhalogenidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte

organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol, 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz), also mindestens ein molares Verhältnis von cyanidfreiem Metallsalz zu Metallcyanidsalz von 2,25 zu 1,00.) und des Metallcyanidsalzes (z.B. Kaliumhexacyanocobaltat) in Gegenwart des organischen Komplexliganden (z.B. tert.-Butanol) umgesetzt, so dass sich eine Suspension bildet, die die Doppelmetallcyanid-Verbindung (z.B. Zinkhexacyanocobaltat), Wasser, überschüssiges cyanidfreies Metallsalz, und den organischen Komplexliganden enthält. Der organische Komplexligand kann dabei in der wässrigen Lösung des cyanidfreien Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des cyanidfreien Metallsalzes und des Metallcyanidsalzes und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante zur Herstellung des Katalysators wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und weiterer komplexbildender Komponente.

Der isolierte und gegebenenfalls gewaschene Feststoff wird anschließend, gegebenenfalls nach Pulverisierung, bei Temperaturen von im allgemeinen 20 - 100°C und bei Drücken von im allgemeinen 0,1 mbarbis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Vorzugsweise wird ein Überschuss an Kohlendioxid bezogen auf die berechnete Menge an eingebautem Kohlendioxid im Polyethercarbonatpolyol eingesetzt, d a bedingt durch die Reaktionsträgheit von Kohlendioxid ein Überschuss von Kohlendioxid von Vorteil ist. Die Menge an Kohlendioxid kann über den Reaktionsdruck oder über den Volumenstrom festgelegt werden. Als Reaktionsdruck hat sich der Bereich von 10 bis 200 bar, besonders bevorzugt 15 bis 180 bar, ganz besonders bevorzugt 20 bis 120 bar für die Copolymerisation zur Herstellung der Polyethercarbonatpolyole als vorteilhaft erwiesen. Für das erfindungsgemäße Verfahren hat sich weiterhin gezeigt, dass die Copolymerisation zur Herstellung der Polyethercarbonatpolyole vorteilhafterweise bei 80 bis 150 °C, bevorzugt 90 bis 135 °C

durchgeführt wird. Werden Temperaturen unterhalb von 80°C (beispielsweise 50°C) eingestellt, kommt die Reaktion zum Erliegen. Bei Temperaturen oberhalb von 150°C steigt die Menge an unerwünschten Nebenprodukten stark an. Weiterhin ist es von Vorteil, dass das $CO_2$ bei der Wahl von Druck und Temperatur möglichst im flüssigen und/oder überkritischen Zustand vorliegt.

**Beispiele**

Das Gewichts- und Zahlenmittel des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel". Dabei wurden Polystyrolproben bekannter Molmasse zur Kalibrierung verwendet.

Die OH-Zahl wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Der Anteil an eingebautem $CO_2$, im resultierenden Polyethercarbonatpolyol sowie das Verhältnis von Propylencarbonat (cyclisches Carbonat) zu Polyethercarbonatpolyol wurden mittels $^1$H-NMR (Firma Bruker, DPX 400, 400 MHz; Pulsprogramm zg30, Wartezeit d1 : 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (IX) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (IX) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad \text{(IX)}$$

Der Gewichtsanteil (in Gew.-%) polymer-gebundenen Carbonats (LC') in der Reaktionsmischung wurde nach Formel (X) berechnet,

$$LC' = \frac{[F(5{,}1-4{,}8) - F(4{,}5)] * 102}{N} * 100\% \qquad \text{(X)}$$

wobei sich der Wert für N ("Nenner" N) nach Formel (XI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XII) berechnet,

$$CC' = \frac{F(4,5) * 102}{N} * 100\% \qquad \text{(XII)}$$

wobei sich der Wert für N nach Formel (XI) berechnet.

Um aus den Werten der Zusammensetzung der Reaktionsmischung die Zusammensetzung bezogen auf den Polymer-Anteil (bestehend aus Polyetherpolyol, welches aus Starter aufgebaut wurde, und Polyethercarbonatpolyol, aufgebaut aus Starter, Propylenoxid und Kohlendioxid während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele) ist normiert auf den Anteil des Polyethercarbonatpolyol-Moleküls, das nicht aus dem Starter besteht.

<u>Ausführungsbeispiele</u>

Es wurde ein Polyetherpolyol als flüssiger Starter eingesetzt. Dieses wurde ausgehend von Propylenglykol durch Alkoxylierung mittels Propylenoxid hergestellt. Das Diol hatte eine OH-Zahl von 143 mg KOH/g..

Ein gemahlener DMC-Katalysator (Doppelmetallcyanid-Katalysator), hergestellt gemäß Beispiel 6 von WO-A 01/80994, wurde in den Starter suspendiert, so dass eine Konzentration von 0,26 Gew.-% an Katalysator im Starter erreicht wurde.

Der schematische Versuchsaufbau der Durchführung der Versuche erfolgte in Anlehnung an Abbildung 2: Aus dem gerührten Vorlagebehälter **<u>1</u>** wurde die Suspension bestehend aus einer oder mehreren H-funktionellen Startersubstanzen und gemahlenem sowie getrockneten DMC-Katalysator mittels einer Membranpumpe mit 80 g/h zu einem Mischer **<u>2</u>** (Kaskadenmischer 2 S, 0,6 mm als kleinster Abstand innerhalb der Kaskade, der Ehrfeld Mikrotechnik BTS GmbH) gefördert. Propylenoxid aus Vorlagebehälter **<u>3</u>** wurde mittels einer HPLC-Pumpe (97 g/h) zum Mischer **<u>2</u>** gefördert. In Mischer **<u>2</u>** erfolgte eine Mischung bei einer Temperatur von 20 °C, wobei die resultierende Mischung noch nicht zur Reaktion kam. Dieser Mischstrom sowie Kohlendioxid (aus einer Gasflasche mit Steigrohr **5** mittels einer HPLC-Pumpe und 32 g/h gefördert) wurde in den Mischer **<u>4</u>** (Kaskadenmischer 2 S, 0,6 mm als kleinster Abstand innerhalb der Kaskade, der Ehrfeld Mikrotechnik BTS GmbH)) geführt, wo die Komponenten bei einer Temperatur von 20 °C vermischt wurden. Auch hierbei kam es noch nicht zur Reaktion. Die Reaktionsmischung wurde aus **4** in den Rohrreaktor **<u>6</u>** geleitet. Der Rohrreaktor hatte einen Außendurchmesser von 2,2 mm und war auf die in der nachfolgenden Tabelle angegebene Reaktionstemperatur temperiert. Das Volumen des Rohrreaktors betrug 45 $cm^3$. Die mittlere Verweilzeit der Komponenten im Rohrreaktor betrug jeweils 11 Minuten. Der zur Konstanthaltung des Drucks im Rohrreaktor von 110 bar wurde durch das Druckrückhaltventil **<u>7</u>** eingestellt. Das entstehende Produkt (im wesentlichen Polyethercarbonatpolyol) wurde im Behälter **<u>8</u>** gesammelt.

Tabelle 1

| | 1 | 2 | 3 |
|---|---|---|---|
| Reaktionstemperatur | 110 | 120 | 130 |
| Umsatz PO [%] | > 99% | > 99% | > 99% |
| eingebautes $CO_2$ [Gew.-%] | 22,9 | 14,9 | 7,9 |
| Verhältnis cyclisches / lineares Carbonat | 0,02 | 0,03 | 0,04 |
| Gewichtsmittel des Molekulargewichts [g/mol] | 2264 | 2245 | 2135 |
| Zahlenmittel des Molekulargewichts [g/mol] | 2785 | 2744 | 2620 |
| Polydispersität | 1,23 | 1,22 | 1,23 |

## Patentansprüche

1. Verfahren zur Herstellung von Polyethercarbonatpolyolen durch Anlagerung von einem oder mehreren Alkylenoxiden und Kohlendioxid an eine oder mehrere H-funktionellen Startersubstanzen in Gegenwart mindestens eines DMC-Katalysators, **dadurch gekennzeichnet, dass** die Anlagerung in einem Rohrreaktor durchgeführt wird.

2. Verfahren gemäß Anspruch 1, wobei

   (i) der DMC-Katalysator in einer oder mehreren H-funktionellen Startersubstanzen suspendiert wird,
   (ii) die Suspension aus (i) mit einem oder mehreren Alkylenoxiden und mit 10 bis 200 bar Kohlendioxid zusammengebracht wird, und
   (iii) das aus (ii) resultierende Gemisch in einem Rohrreaktor bei einer Temperatur von 80 bis 150 °C zur Reaktion gebracht wird.

3. Verfahren gemäß Anspruch 2, wobei in Schritt (iii) der Reaktionsdruck 10 bis 200 bar beträgt.

4. Verfahren gemäß Anspruch 2 oder 3, wobei

   (ii-1) die Suspension aus (i) zunächst in einem ersten Mischer mit einem oder mehreren Alkylenoxiden zusammengebracht wird und anschließend in einem zweiten Mischer mit 10 bis 200 bar Kohlendioxid zusammengebracht wird, oder
   (ii-2) die Suspension aus (i) zunächst in einem ersten Mischer mit 10 bis 200 bar Kohlendioxid zusammengebracht wird und anschließend in einem zweiten Mischer mit einem oder mehreren Alkylenoxiden zusammengebracht wird.

5. Verfahren gemäß einem der Ansprüche 2 bis 4, wobei Schritt (iii) bei einem Reaktionsdruck von 15 bis 180 bar durchgeführt wird.

6. Verfahren gemäß einem der Ansprüche 2 bis 4, wobei Schritt (iii) bei einer Temperatur von 90 bis 135 °C und einem Reaktionsdruck von 20 bis 180 bar durchgeführt wird.

7. Verfahren gemäß einem der Ansprüche 1 bis 6, wobei der Rohrreaktoraus aus einem durchgängigen Stück Rohr aufgebaut ist.

8. Verfahren gemäß einem der Ansprüche 1 bis 7, wobei der innere Durchmesser des Rohrreaktors von 1,1 mm bis 500 mm beträgt.

9. Verfahren gemäß einem der Ansprüche 1 bis 6, wobei der Rohrreaktoraus aus mindestens zwei aneinandergefügten Rohren aufgebaut ist.

10. Verfahren gemäß einem der Ansprüche 1 bis 6, wobei der Rohrreaktoraus aus mindestens zwei aneinandergefügten Rohren aufgebaut ist, **dadurch gekennzeichnet, dass** der Rohrreaktor über die ersten 20 bis 60% seiner Länge einen inneren Durchmesser des Rohrreaktors von 1,1 mm bis < 100 mm aufweist, und über die zweiten 80 bis 40 % seiner Länge einen inneren Durchmesser des Rohrreaktors von 100 mm bis 500 mm aufweist.

11. Verfahren gemäß einem der Ansprüche 1 bis 10, wobei der Rohrreaktor frei ist von mehreren, parallel übereinander angeordneten Lagen, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden.

12. Verfahren gemäß einem der Ansprüche 1 bis 10, wobei der Rohrreaktor frei ist von mehreren, parallel übereinander angeordneten Lagen, die mikrostrukturiert sind, dergestalt, dass jede Lage eine Vielzahl von parallel zueinander angeordneten Kanälen aufweist, die von einer Seite der Platte bis zur gegenüberliegenden Seite derselben einen durchgehenden Strömungsweg ausbilden.

13. Verfahren gemäß einem der Ansprüche 1 bis 12, wobei die H- funktionelle Startersubstanz ausgewählt ist aus mindestens einer der Gruppe bestehend aus Polyetherpolyol, Polyesterpolyol, Polyethercarbonatpolyol, Wasser, Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, 3-Methyl-1,5-pentandiol, 1,6-Hexandiol; 1,8-Octandiol, 1,10-Decandiol, 1,12-Dodecandiol, 1,4-Bis-(hydroxymethyl)cyclohexan, Triethylenglykol, Tetraethylenglykol, Dipropylenglykol, Tripropylenglykol, Dibutylenglykol Trimethylolpropan, Glycerin, Trishydroxyethylisocyanurat, Rizinusöl, Pentaerythrit, Sorbit, Hexit, Saccharose, Stärke, Stärkehydrolysat, Cellulose, Cellulosehydrolysat, hydroxyfunktionalisierte Fette und hydroxyfunktionalisierte Öle eingesetzt wird.

**14.** Verfahren gemäß einem der Ansprüche 1 bis 13, wobei der Rohrreaktor ein Verhältnis von Rohrlänge L zu Rohrdurchmesser $d_R$ von $L / d_R > 50$ aufweist.

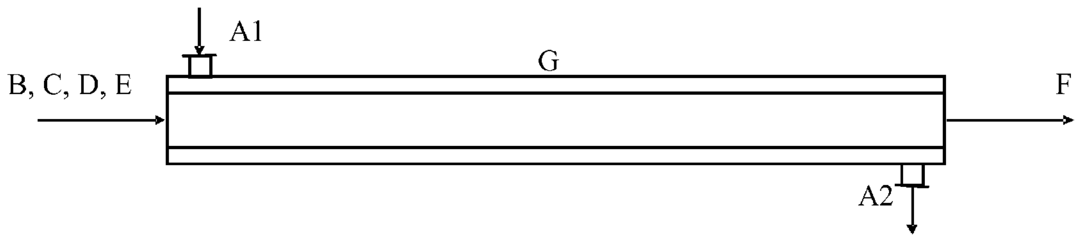


Abbildung 1

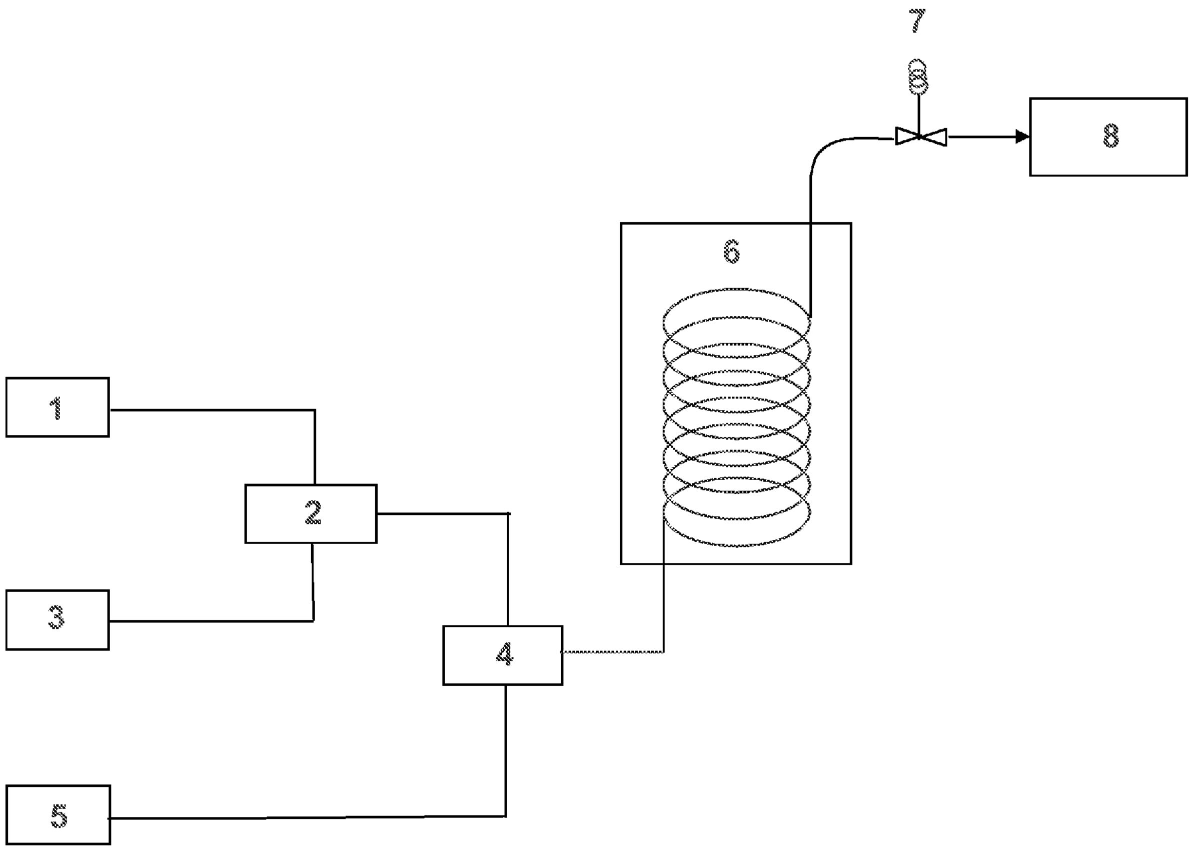


Abbildung 2

Europäisches Patentamt
European Patent Office
Office européen des brevets

**EUROPÄISCHER RECHERCHENBERICHT**

Nummer der Anmeldung
EP 10 18 7625

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 2008/092767 A1 (BASF SE [DE]; MIJOLOVIC DARIJO [DE]; KUMMETER MARKUS [DE]; STOESSER MI) 7. August 2008 (2008-08-07)<br>* Ansprüche *<br>* Beispiele * | 1-14 | INV.<br>C08G64/34<br>C08G65/26 |
| Y | DE 10 2005 041142 A1 (BASF AG [DE])<br>1. März 2007 (2007-03-01)<br>* Anspruch 1 * | 1-14 | |
| Y | DD 203 735 A1 (ADW DDR [DD])<br>2. November 1983 (1983-11-02)<br>* Anspruch 1 *<br>* Seiten 3 und 4 überbrückender Absatz * | 1-14 | |
| Y,D | WO 2007/135154 A1 (BASF AG [DE]; LOEFFLER ACHIM [DE]; LOTH WOLFGANG [DE]; BOEHLING RALF [] 29. November 2007 (2007-11-29)<br>* Ansprüche * | 1-14 | |

RECHERCHIERTE SACHGEBIETE (IPC)

C08G

Der vorliegende Recherchenbericht wurde für alle Patentansprüche erstellt

1

| Recherchenort | Abschlußdatum der Recherche | Prüfer |
|---|---|---|
| Den Haag | 1. März 2011 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 10 18 7625

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2011

| Im Recherchenbericht angeführtes Patentdokument | Datum der Veröffentlichung | Mitglied(er) der Patentfamilie | Datum der Veröffentlichung |
|---|---|---|---|
| WO 2008092767 A1 | 07-08-2008 | AT 493457 T | 15-01-2011 |
| | | CN 101611074 A | 23-12-2009 |
| | | EP 2115032 A1 | 11-11-2009 |
| | | JP 2010516796 T | 20-05-2010 |
| | | US 2010048935 A1 | 25-02-2010 |
| DE 102005041142 A1 | 01-03-2007 | AT 410462 T | 15-10-2008 |
| | | CN 101253218 A | 27-08-2008 |
| | | EP 1924629 A1 | 28-05-2008 |
| | | WO 2007025881 A1 | 08-03-2007 |
| | | ES 2314945 T3 | 16-03-2009 |
| | | JP 2009506180 T | 12-02-2009 |
| | | KR 20080038211 A | 02-05-2008 |
| | | PT 1924629 E | 03-11-2008 |
| | | US 2008161509 A1 | 03-07-2008 |
| DD 203735 A1 | 02-11-1983 | KEINE | |
| WO 2007135154 A1 | 29-11-2007 | CN 101479317 A | 08-07-2009 |
| | | EP 2027180 A1 | 25-02-2009 |
| | | JP 2009537687 T | 29-10-2009 |
| | | KR 20090014296 A | 09-02-2009 |
| | | US 2009203874 A1 | 13-08-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4500704 A
- WO 2006103213 A
- WO 2008092767 A
- WO 2007135154 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A

### In der Beschreibung aufgeführte Nicht-Patentliteratur

- **INOUE et al.** Copolymerization of Carbon Dioxide and Epoxide with Organometallic Compounds. *Die Makromolekulare Chemie,* 1969, vol. 130, 210-220